(19) Europäisches Patentamt / European Patent Office / Office européen des brevets

(11) **EP 2 032 383 B1**

(12) **FASCICULE DE BREVET EUROPEEN**

(45) Date de publication et mention
de la délivrance du brevet:
**19.01.2011 Bulletin 2011/03**

(21) Numéro de dépôt: **07766043.9**

(22) Date de dépôt: **14.05.2007**

(51) Int Cl.:
***B60L 11/00*** *(2006.01)*

(86) Numéro de dépôt international:
**PCT/FR2007/051267**

(87) Numéro de publication internationale:
**WO 2008/000981 (03.01.2008 Gazette 2008/01)**

(54) **DISPOSITIF MICRO-HYBRIDE POUR VEHICULE AUTOMOBILE**

MIKROHYBRIDVORRICHTUNG FÜR EIN KRAFTFAHRZEUG

MICRO-HYBRID DEVICE FOR MOTOR VEHICLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.06.2006 FR 0652685**

(43) Date de publication de la demande:
**11.03.2009 Bulletin 2009/11**

(73) Titulaire: **VALEO EQUIPEMENTS ELECTRIQUES MOTEUR**
**94046 Créteil Cedex (FR)**

(72) Inventeurs:
• **MASSON, Philippe**
**F-77166 Grisy-Suisnes (FR)**
• **CHEMIN, Michaël**
**F-51700 Festigny (FR)**

(56) Documents cités:
**EP-A- 1 241 041    DE-A- 10 042 414**
**FR-A- 2 834 941    FR-A- 2 842 144**
**US-A1- 2005 061 561**

• **MESTRE P ET AL: "UTILIZATION OF ULTRACAPACITORS AS A AUXILIARY POWER SOURCE IN ELECTRIC VEHICLE" EPE '97. 7TH. EUROPEAN CONFERENCE ON POWER ELECTRONICS AND APPLICATIONS. TRONDHEIM, SEPT. 8 - 10, 1997, EPE . EUROPEAN CONFERENCE ON POWER ELECTRONICS AND APPLICATIONS, BRUSSELS, EPE ASSOCIATION, B, vol. VOL. 4 CONF. 7, 8 septembre 1997 (1997-09-08), pages 4670-4673, XP000768210 ISBN: 90-75815-02-6**

**Description**

La présente invention trouve des applications de manière avantageuse, dans le domaine du secteur automobile. Elle a pour objet un dispositif micro-hybride dans un véhicule automobile. Ce dispositif micro-hybride a pour but d'une part de récupérer de l'énergie électrique lors des étapes de freinage et, d'autre part, il a pour but de restituer cette énergie en fonction de la consommation des divers équipements électriques et électroniques que comporte le véhicule automobile.

Lors d'un freinage d'un véhicule automobile, de l'énergie cinétique est dissipée sous forme de chaleur dans les disques de frein. Pour récupérer cette énergie cinétique il existe dans l'état de la technique des dispositifs de freinage récupératif. De tels dispositifs sont aptes à récupérer l'énergie cinétique issue du freinage du véhicule automobile afin de la transformer en énergie électrique.

Dans un véhicule automobile, le dispositif de freinage récupératif est connecté à un réseau de distribution électrique du véhicule qui comporte une batterie destinée à stocker cette énergie électrique convertie. Cette batterie est généralement une batterie conventionnelle au plomb.

Le réseau de distribution électrique restitue l'énergie emmagasinée dans la batterie aux différents équipements électriques et électroniques embarqués dans le véhicule automobile. L'architecture de l'ensemble des composants appartenant au réseau de distribution électrique, ou réseau de bord du véhicule, est celle d'un branchement en cascade, désigné également branchement en série par la suite dans la description.

Un problème rencontré avec ce type d'architecture est qu'avec une seule batterie sur le réseau de distribution, elle est vite déchargée lorsque l'ensemble des équipements électriques et électroniques consomment en même temps. Cet inconvénient est d'autant plus pénalisant que ces équipements consomment énormément d'énergie électrique.

Une solution classique à ce problème consiste à augmenter la capacité de stockage de la batterie. La taille physique d'une telle batterie devient alors très importante. Cette solution présente divers inconvénients, notamment le prix car une telle batterie est relativement onéreuse, et leur montage augmente l'encombrement de l'ensemble du compartiment moteur du véhicule. Ainsi, l'agencement d'une telle batterie dans un environnement difficile d'accès va à l'encontre des problèmes de maniabilité, de poids, de robustesse et de coût.

De plus, les batteries d'énergie utilisées actuellement sont des batteries conventionnelles. Ces batteries ne sont pas adaptées pour être chargées avec des courants importants pendant un temps suffisant pour assurer une récupération de l'énergie issue du dispositif de freinage. Avec ce type de dispositif, la gestion de cette énergie transitoire n'est pas très efficace pour assurer une régulation de la tension circulant dans le réseau de distribution électrique du véhicule.

Une autre solution consiste à équiper le système d'alimentation électrique du véhicule d'un second réseau de distribution électrique avec un stockeur d'énergie secondaire ayant une capacité de stockage différente de celle de la batterie principale ou stockeur principal. Le second réseau de distribution cohabite avec le premier réseau ayant le stockeur principal. Le second réseau ayant le stockeur secondaire délivre une tension d'alimentation continue flottante et le premier réseau ayant le stockeur principal délivre une basse tension d'alimentation continue, généralement inférieure à ladite tension flottante. Un réseau global bi-tension de distribution d'énergie électrique est ainsi obtenu.

Les deux stockeurs sont couplés entre eux par l'intermédiaire d'un convertisseur de tension continu-continu (DC/DC) réversible. Le convertisseur a pour fonction de permettre des transferts d'énergie entre les deux stockeurs et les réseaux de distribution. Un générateur de courant électrique, comportant un alternateur ou alterno-démarreur couplé au moteur thermique du véhicule, alimente directement en énergie électrique le stockeur secondaire et, à travers le convertisseur, le stockeur principal.

Il est connu d'utiliser un pack de condensateurs de très grande capacité en tant que stockeur secondaire. Ces condensateurs de très grande capacité sont habituellement appelés « super-capacité » ou « super-condensateur » par l'homme du métier. Le stockeur secondaire, qui est appelé « super-capacité » dans la suite de la description, a pour fonction de récupérer un maximum d'énergie électrique lorsque le générateur de courant électrique opère en freinage récupératif.

Par rapport à une batterie classique au plomb, la super-capacité est indifférente au nombre des cycles de charge / décharge et à leur profondeur et est peu contrainte au niveau de la tension de charge qui pourra varier dans des proportions importantes.

Ce type de système d'alimentation électrique bi-tension se présente également sous la forme d'une architecture en série. Les deux stockeurs utilisés dans un tel système permettent de mieux répondre au problème d'alimentation en énergie du véhicule.

Cependant, une architecture de type bi-tension série s'intègre difficilement dans le véhicule, du fait d'une connectique relativement complexe et des composants volumineux à mettre en place sous le capot du véhicule.

On observe donc que les solutions ci-dessus proposées par l'état de la technique pour répondre aux problèmes de stockage et d'alimentation en énergie de l'ensemble des équipements électriques et électroniques ne sont pas satisfaisantes pour répondre notamment à des contraintes d'encombrement, de poids et surtout de coût, et à des préoccupations propres à des domaines d'application spécifiques, tels que l'automobile.

Il est également connu une architecture différente de l'architecture de type série commentée ci-dessus dans laquelle la super-capacité est reliée à un réseau d'alimentation électrique à courant continu du véhicule à travers un convertisseur continu-continu réversible. Ce type d'architecture est appelée architecture parallèle et présente l'avantage d'une connectique plus simple qui facilite l'insertion du dispositif micro-hydride sous le capot du véhicule.

Il est aujourd'hui souhaitable de proposer des solutions autour de cette architecture parallèle de manière à élargir les possibilités de conception des dispositifs micro-hybrides.

La demande de brevet DE10042414 (A1) décrit un dispositif selon le préambule de la revendication 1. Le système comporte également une batterie et le montage de ces composants du système est réalisé selon l'architecture parallèle. La charge de la super-capacité à partir de la batterie et le retour de l'énergie stockée dans la super-capacité vers la batterie sont réalisés en fonction de l'état de charge de la super-capacité et d'au moins un paramètre caractéristique représentant une disponibilité d'énergie existante ou une demande d'une machine électrique présente dans le système.

La présente invention a pour objet de fournir un dispositif micro-hybride de type parallèle autorisant une meilleure exploitation des performances des batteries par rapport aux solutions de la technique antérieure.

Le dispositif selon l'invention comporte, dans un branchement électrique en cascade, une machine électrique tournante couplé mécaniquement à un moteur thermique du véhicule, un convertisseur alternatif-continu, un bus d'alimentation électrique à courant continu, le bus d'alimentation électrique à courant continu étant connecté au convertisseur alternatif-continu et étant apte à être connecté aux bornes d'une batterie de stockage d'énergie alimentant un réseau de distribution électrique du véhicule, et des moyens à réservoir d'énergie de grande capacité qui sont montés en parallèle par rapport audit branchement en cascade à travers un convertisseur continu-continu réversible connecté au bus d'alimentation électrique à courant continu.

Conformément à l'invention, le dispositif comprend également des moyens électroniques de commande tels que définis dans la revendication 1 ci-annexée.

Conformément à l'invention, le dispositif ci-dessus peut comporter également au moins une des caractéristiques suivantes :

- Le convertisseur continu-continu réversible est de type à découpage.

- Les moyens à réservoir d'énergie de grande capacité comportent une super-capacité.

- Les moyens à réservoir d'énergie de grande capacité sont de type se chargeant en fonctionnement à des tensions comprises entre 12 Volts et 60 Volts.

- Les moyens à réservoir d'énergie de grande capacité sont de type se chargeant en fonctionnement à des tensions comprises entre 0 Volt et quelques centaines de Volts.

- La machine électrique tournante est un alternateur.

- La machine électrique tournante est un alterno-démarreur.

- A chaque délestage ou appel de charge, les moyens électroniques de commande régulent la tension pour réduire les surtensions et les sous-tensions sur le réseau de distribution électrique du véhicule provoquées par une dynamique limitée de la machine électrique tournante en mode alternateur.

- Les moyens électroniques de commande commandent un fonctionnement du dispositif de telle manière qu'un apport de courant d'assistance à la batterie est déclenché automatiquement lors d'une phase d'accélération ou de démarrage, cet apport réduisant une chute de tension aux bornes de la batterie.

- Les moyens électroniques de commande commandent un fonctionnement du dispositif de telle manière à restituer de l'énergie stockée dans les moyens à réservoir d'énergie pour alimenter le bus d'alimentation électrique à courant continu en remplacement de la machine électrique tournante lorsque le moteur thermique est en fonctionnement ou à l'arrêt.

- Les moyens électroniques de commande commandent un fonctionnement du dispositif de telle manière à alimenter les moyens à réservoir d'énergie par la machine électrique tournante en mode alternateur lorsque la batterie est complètement chargée mais que les moyens à réservoir d'énergie ne sont pas complètement chargés et que le moteur thermique n'est pas à l'arrêt.

- Les moyens électroniques de commande commandent un fonctionnement du dispositif de telle manière que lorsqu'il y a une sollicitation du frein de la part du conducteur, une partie de l'énergie

cinétique du véhicule est récupérée et fournie aux moyens à réservoir d'énergie afin de pouvoir le remplir.

- Les moyens électroniques de commande commandent un fonctionnement du dispositif de telle manière que lorsqu'il n'y a pas de sollicitation de l'accélérateur, ni de sollicitation du frein, si le moteur thermique n'est pas à l'arrêt, alors la machine électrique tournante en mode alternateur alimente le réseau de distribution électrique et la batterie.

- Les moyens électroniques de commande commandent un fonctionnement du dispositif de telle manière que lorsqu'il n'y a pas de sollicitation de l'accélérateur, ni de sollicitation du frein, si le moteur thermique est à l'arrêt, alors les moyens à réservoir d'énergie alimentent le réseau de distribution électrique et la batterie.

D'autres caractéristiques et avantages de l'invention apparaîtront au cours de la lecture de la description détaillée qui suit pour la compréhension de laquelle on se reportera aux figures annexées parmi lesquelles:

- la figure 1 représente schématiquement une illustration de moyens mettant en oeuvre un mode de réalisation de l'invention ; et

- la figure 2 est un diagramme d'état représentant trois modes de fonctionnement implantés dans ce mode de réalisation de l'invention.

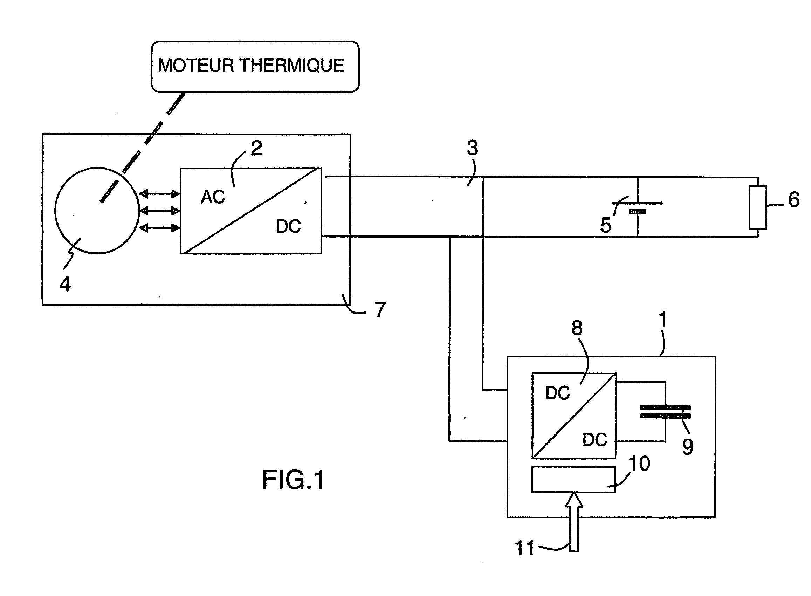

La figure 1 montre une représentation schématique d'un dispositif 1 de récupération et restitution d'énergie électrique installé dans un véhicule automobile. La figure 1 montre un générateur de tension / moteur électrique 7 relié à un bus continu 3. Le générateur de tension / moteur électrique 7 comprend une machine électrique tournante polyphasée 4 couplée mécaniquement à un moteur thermique du véhicule, plus précisément au vilebrequin du moteur thermique, et un convertisseur de tension alternatif-continu (AC/DC) 2. Le convertisseur AC/DC 2 est un dispositif électrique permettant de convertir une tension continue en plusieurs tensions alternatives, une par phase. Le convertisseur AC/DC 2 comporte plusieurs bras de pont (non représentés). Chaque bras de pont comporte plusieurs interrupteurs commandés électroniquement. Dans un exemple préféré, le convertisseur AC/DC 2 est un onduleur-redresseur triphasé pilotant la machine tournante 4 en mode moteur électrique.

Le bus continu 3 comporte une source de tension continue 5. Cette source de tension 5 est dans un exemple préféré une batterie ou un réseau redressé. La notion de batterie se comprend dans la présente invention comme couvrant tout dispositif formant un réservoir d'énergie électrique rechargeable, aux bornes duquel une tension électrique continue non nulle est disponible, du moins dans un état de charge non nul du dispositif.

Cette source de tension 5 est alimentée par la machine électrique 4 via le convertisseur AC/DC 2. Le bus continu 3 comporte des équipements 6 électriques ou électroniques. Ces équipements 6 sont notamment des lignes de connexion branchées en série à la source de tension 5 ou des consommateurs électriques branchés en parallèle à la source de tension 5. Les consommateurs électriques dans un véhicule automobile peuvent être, entre autres, des phares, une radio, une climatisation, des essuies glace, etc....

La machine électrique 4 peut être un moteur à induction ou une machine synchrone. L'équipement 7 combinant la machine électrique 4 et le convertisseur AC/DC 2 peut être un alternateur ou un alterno-démareur. Le concept d'alterno-démarreur réversible est un alternateur conventionnel qui offre la possibilité de démarrer le moteur thermique en mode convertisseur et une génération de courant à haut rendement en mode redresseur. En mode alternateur, l'alterno-démarreur génère une puissance électrique supérieure de 15% à celle obtenue via un alternateur conventionnel. En mode réversible, il permet un démarrage rapide et silencieux du moteur entièrement géré par électronique. L'alterno-démarreur est facile à implanter. Il est compatible avec les architectures et les réseaux de puissance des véhicules actuels.

Le dispositif de récupération et restitution d'énergie électrique 1 est branché en parallèle sur le bus continu 3, aux bornes de la batterie 5. Il peut être branché de manière simple sur n'importe quel type d'équipement 7 de véhicule automobile. Du fait de son branchement en parallèle, ce dispositif 1 n'a besoin d'aucun système d'adaptation lorsqu'il est branché sur le réseau de bord conventionnel d'un véhicule automobile.

De même, le dispositif 1 peut être intégré dans différents endroits du véhicule automobile, même ailleurs que sous le capot. Ainsi, l'intégration du dispositif 1 dans un véhicule automobile est flexible. Cette souplesse d'intégration permet de réduire les contraintes d'implantation sur le véhicule. Dans un exemple, le dispositif 1 peut être intégré dans le coffre du véhicule automobile. Le dispositif 1 de l'invention résout ainsi le problème de l'état de la technique du placement du réservoir d'énergie 9 prés du convertisseur AC/DC 2.

Dans l'état de la technique, le convertisseur AC/DC 2 et la machine électrique 4 sont proches et la batterie est conventionnellement sous le capot. Ceci pose d'une part un problème d'effets thermiques dépendant de la longueur des câbles entre la batterie et le convertisseur, et d'autre part, un problème d'intégration du dispositif 1 qui représente un certain volume. Le dispositif 1 de l'invention résout ces problèmes de l'état de la technique par sa flexibilité d'intégration dans le véhicule automobile. Il est ainsi indépendant des différents éléments du véhicule automobile.

Le dispositif 1 de l'invention permet d'optimiser le rendement du moteur thermique du véhicule automobile. Il permet ainsi de stocker de l'énergie dans un réservoir d'énergie 9 lorsqu'elle est excédentaire, dans les phases de freinage par exemple, et de la restituer lorsque cela est possible, notamment dans les phases d'accélération, de démarrage, lorsque le moteur thermique est à l'arrêt pour alimenter le bus continu 3 ou lors des phases alternateur, moteur thermique tournant, pour soulager l'alternateur et donc réduire la consommation de carburant.

Le dispositif micro-hybride suivant l'invention comporte dans le cas décrit un convertisseur 8 continu-continu. Le convertisseur 8 transforme la puissance que délivre l'alternateur sous une tension constante en une même puissance sous une tension variable de 0 à 60 Volt par exemple. Le convertisseur continu-continu considéré peut avoir une topologie en hacheur parallèle. Dans ce cas, il fournit une tension de sortie supérieure à la tension d'entrée. Il est bien entendu que le convertisseur continu-continu peut répondre à d'autres topologies comme, par exemple, en hacheur série ou en stockage inductif. En hacheur série, le convertisseur fournit une tension de sortie inférieure à la tension d'entrée. Le convertisseur de l'invention est dimensionné en fonction de la puissance de freinage à récupérer.

Le convertisseur 8 est un convertisseur à découpage capable d'absorber les ondulations de tension en mode alternateur, car sa fréquence de découpage et sa bande passante sont beaucoup plus rapides que les ondulations de la tension aux bornes du bus continu 3.

Le dispositif 1 comporte donc le réservoir d'énergie 9 branchée au convertisseur 8. Le réservoir d'énergie 9 est de préférence un super-condensateur. Le réservoir d'énergie 9 peut être tout autre type de réservoir d'énergie permettant de réaliser l'invention. Il est choisi pour une tension supérieure à 12 volts. Il peut admettre avantageusement jusqu'à 60 volts pour des réseaux basse tension et quelques centaines de Volts sur les réseaux de véhicules hybrides.

Dans un exemple préféré, ce réservoir d'énergie 9 est un condensateur de grande capacité plus communément connu sous la désignation EDLC. Ce réservoir d'énergie 9 est chargé lors des freinages. Il peut être chargé à des tensions supérieures à 12 volts. Ce type de réservoir d'énergie de grande capacité peut être chargé avec des courants importants pendant peu de temps. Par exemple, pendant cinq secondes, ce type de réservoir d'énergie 9 peut permettre un stockage d'énergie avec des puissances de plusieurs kilowatts, que ne permettent pas les batteries conventionnelles. Les batteries conventionnelles ne permettent pas d'accepter une si grande puissance instantanée.

En mode alterno-démarreur, la taille physique du réservoir d'énergie 9 peut être réduite de 20 à 30% par rapport à la taille conventionnelle des super-condensateurs utilisés dans une architecture série.

Le dispositif micro-hybride tel que décrit permet de récupérer l'énergie électrique issue de l'équipement 7, le convertisseur 8 effectue l'adaptation des tensions entre l'équipement 7 et le réservoir d'énergie 9. Cette énergie électrique est ensuite emmagasinée dans le réservoir d'énergie 9.

Lorsque le dispositif 1 fonctionne avec un alterno-démarreur, l'énergie emmagasinée dans le réservoir d'énergie 9 peut être restituée, d'une part, pour le démarrage du moteur thermique, et d'autre part, pour assurer l'alimentation des équipements 6 électroniques et électriques et pour assister la source d'énergie 5 lors de modes d'assistance en couple (accélération du véhicule) du moteur thermique. Lorsque, le dispositif 1 fonctionne avec un alternateur, le réservoir d'énergie 9 restitue son énergie pour l'alimentation des équipements 6.

Ainsi, le dispositif 1 de l'invention peut être intégré avec l'un ou l'autre des équipements de type alternateur ou alterno-démarreur.

Le dispositif 1 peut être installé dans n'importe quel type de véhicule, même ceux pour lequel il n'est pas prévu une tension de 12 volts.

Le fonctionnement du dispositif micro-hybride est commandé par une unité de commande 10. Cette unité de commande 10 contrôle, régule et restitue l'énergie emmagasinée par le réservoir d'énergie 9 en fonction d'une tension mesurée sur le bus continu 3.

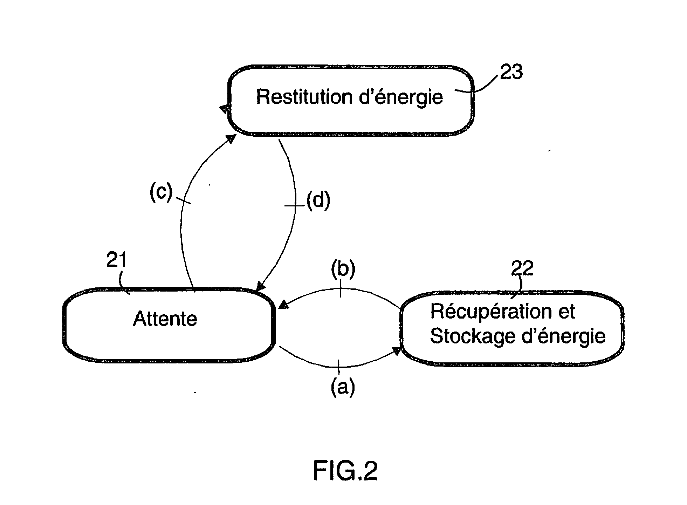

L'unité de commande 10 pilote le dispositif micro-hybride selon trois modes de fonctionnement représentés dans le diagramme d'état à la figure 2.

Le diagramme d'état de la Fig.2 représente les trois modes suivants : un mode d'attente 21 (« stand-by » en anglais), un mode 22 de récupération et stockage de l'énergie et un mode 23 de récupération de l'énergie.

Le mode d'attente 21 est le mode passif inactif.

Le mode de récupération et de stockage d'énergie 22 s'enclenche lorsque la condition (a) suivante est vrai en mode autonome :

$$(a) \quad U_{bus} > U_{consigne}.$$

Dans laquelle, $U_{bus}$ est la tension présente sur le bus continu 3 et $U_{consigne}$ est une tension de consigne.

En mode piloté, le mode de récupération peut être inhibé par une consigne extérieure 11 montré à la figure 1..

Le mode de récupération et de stockage d'énergie 22 est de préférence enclenché pendant les phases de freinage du véhicule afin de récupérer une énergie qui sinon aurait été perdue dans les disques de frein du véhicule.

Le mode de restitution d'énergie 23 s'enclenche lorsque la condition (c) suivante est vrai en mode autonome:

$$(c) \quad U_{bus} < U_{consigne}.$$

En mode piloté, ce mode peut être inhibé par la consigne extérieure 11 même si la condition (c) est vraie. Ce mode est de préférence enclenché le plus souvent possible afin d'utiliser l'énergie que l'on a récupéré gratuitement lors d'un freinage. L'utilisation de cette énergie soulage le générateur de tension / moteur électrique 7 du véhicule et réduit donc la consommation de carburant. On enclenche se mode dans les situations suivantes de la vie du véhicule :

- phase d'accélération du véhicule,

- phase de démarrage du moteur thermique,

- phase de d'arrêt du véhicule,

- phase de roulage du véhicule.

Les autres conditions (b) et (d) indiquées à la figure 2 sont les suivantes :

$$(b) \quad U_{bus} =< U_{consigne}$$

ou réservoir 9 plein,

$$(d) \quad U_{bus} >= U_{consigne}$$

ou réservoir 9 vide.

## Phase de freinage

Lors de la phase de freinage du véhicule, l'énergie mécanique exercée sur l'arbre de l'alternateur est transformée en énergie électrique. Pour obtenir un freinage efficace, on doit être capable de récupérer le plus rapidement possible l'énergie mécanique emmagasinée sur l'arbre du moteur électrique.

Lorsque l'unité de commande 10 détecte une hausse de la tension du bus continu 3 du véhicule, le mode de récupération est activé par celle-ci. Le réservoir 9 se remplit jusqu'à ce que la commande détecte que le réservoir 9 est plein ou que la phase de freinage est terminée.

A la fin de ce mode, l'unité de commande 10 met le dispositif 1 en mode d'attente.

## Phase d'accélération du véhicule

Le dispositif 1 de l'invention permet également en mode d'accélération du véhicule de fournir de l'énergie électrique emmagasinée dans le réservoir d'énergie 9 afin de donner un couple d'appoint au moteur thermique pour entraîner le véhicule.

Lorsque la batterie 5 est chargée, l'alterno-démarreur 4, 7 devient disponible en tant que moteur électrique. Si le conducteur du véhicule sollicite l'accélérateur, le dispositif micro-hybride permet, au moyen de l'unité de commande et de critères de sélection qui lui sont propres, de décider s'il y a la possibilité de solliciter l'alterno-démarreur en mode moteur, pour fournir à travers une courroie couplée au vilebrequin le surplus de couple demandé en puisant son énergie dans le réservoir d'énergie 9 du dispositif et dans la batterie 5.

La fin de ce mode de restitution d'énergie est décidé par le dispositif lorsque le réservoir d'énergie est vide ou lorsque la phase d'accélération est terminée.

## Phase de démarrage

Le fonctionnement est ici analogue à celui en phase d'accélération.

Le dispositif joue aussi un rôle d'assistance à la batterie 5 lors de cette phase de démarrage afin d'améliorer la performance du démarrage mais aussi de limiter la chute de tension du réseau de bord (bus continu 3) durant cette phase de fonctionnement. Ce type de fonctionnement est valable aussi bien avec un démarreur classique qu'avec un alterno-démarreur. La fin de ce mode peut être décidé lorsque le réservoir d'énergie 9 est vide ou lorsque la phase de démarrage est terminée.

## Phase d'arrêt

La phase d'arrêt correspond à un arrêt du moteur thermique qui peut être provoqué par la fonction marche/arrêt (également appelée «Stop & Go») du véhicule. Ces arrêts du moteur thermique correspondent à des phases de vie du véhicule telles que un arrêt à un feu rouge de feux de circulation tricolores, un arrêt à un stop ou une situation de bouchon.

Durant cette phase, le générateur de tension / moteur électrique 7 n'est pas disponible et les équipements électriques du véhicule doivent cependant être alimentés. Toutefois, la batterie au plomb conventionnelle 5 ne supporte pas les décharges importantes. On utilisera donc de préférence le dispositif dans le mode de restitution d'énergie afin d'alimenter le réseau de bord en remplacement du générateur de tension 7 et de la batterie 5.

La fin de ce mode sera déclenché lorsque le réservoir d'énergie 9 sera vide ou lorsque la phase d'arrêt sera terminée.

## Phase de roulage du véhicule

En mode alternateur, le moteur thermique du véhicule produit une énergie mécanique sur la courroie entraînant l'arbre de l'alternateur qui est une machine synchrone. L'alternateur fournit une énergie électrique. Cette énergie électrique est utilisée pour alimenter la batterie classique et les équipements consommateurs de courant.

Durant cette phase, on peut utiliser le dispositif dans les modes de fonctionnement suivants : recharge du réservoir 9 ou restitution de l'énergie.

Pour une optimisation globale du carburant consommé, on préférera utiliser le dispositif 1 en mode de restitution de l'énergie pour suppléer le générateur de tension 7, afin d'alimenter des consommateurs 6. Ceci permet de limiter le couple prélevé sur le vilebrequin par la machine électrique 4 et donc de diminuer la consommation de courant.

Le dispositif 1 agit aussi comme un filtre actif de la tension aux bornes du bus continu pour diminuer l'ondulation de courant générée par l'alternateur. Le dispositif micro-hybride que constitue l'invention peut être activé dans un mode ou l'autre à chaque délestage ou appel de charge pour réduire des surtensions et/ou des sous-tensions sur ledit bus continu, surtensions et/ou sous-tensions auxquelles l'alternateur ne peut pas apporter de réponse du fait de sa faible bande passante.

## Revendications

1. Dispositif micro-hybride pour véhicule automobile, ledit dispositif comportant, dans un branchement électrique en cascade, une machine électrique tournante (4) couplée mécaniquement à un moteur thermique dudit véhicule, un convertisseur alternatif-continu (2), un bus d'alimentation électrique à courant continu (3), ledit bus d'alimentation électrique à courant continu (3) étant connecté audit convertisseur alternatif-continu (2) et étant apte à être connecté aux bornes d'une batterie de stockage d'énergie (5) alimentant un réseau de distribution électrique dudit véhicule, et des moyens à réservoir d'énergie de grande capacité (1, 9) qui sont montés en parallèle par rapport audit branchement en cascade à travers un convertisseur continu-continu réversible (8) connecté audit bus d'alimentation électrique à courant continu (3), **caractérisé en ce qu'**il comprend également des moyens électroniques de commande (10) commandant un fonctionnement du dispositif selon l'un ou l'autre des modes suivants:

   un mode de fonctionnement autonome dans lequel la commande du dispositif est définie de manière autonome par lesdits moyens électroniques de commande (10), et
   un mode de fonctionnement piloté dans lequel la commande du dispositif est définie par lesdits moyens électroniques de commande (10) en fonction d'au moins une information (11) fournie au dispositif par un système dudit véhicule, et **en ce que**,
   dans ledit un mode de fonctionnement autonome, lesdits moyens électroniques de commande (10) sont programmés pour assurer automatiquement une régulation du bus d'alimentation électrique à courant continu (3) en fonction d'une tension constante $U_{consigne}$ et d'une tension $U_{bus}$ mesurée sur le bus lors d'une récupération d'énergie dans lesdits moyens à réservoir d'énergie (1) qui s'enclenche lorsque la condition $U_{bus} > U_{consigne}$ est satisfaite ou lors d'une restitution d'énergie par lesdits moyens à réservoir d'énergie (1) qui s'enclenche lorsque la condition $U_{bus} < U_{consigne}$ est satisfaite.

2. Dispositif selon la revendication 1, **caractérisé en ce que** ledit convertisseur continu-continu réversible (8) est de type à découpage.

3. Dispositif selon la revendication 1 ou 2, **caractérisé en ce que** lesdits moyens à réservoir d'énergie de grande capacité (1) comportent une super-capacité (9).

4. Dispositif selon l'une quelconque des revendications 1 à 3, **caractérisé en ce que** lesdits moyens à réservoir d'énergie de grande capacité (1) sont de type se chargeant en fonctionnement à des tensions comprises entre 12 Volts et 60 Volts.

5. Dispositif selon l'une quelconque des revendications 1 à 3, **caractérisé en ce que** lesdits moyens à réservoir d'énergie de grande capacité (1) sont de type se chargeant en fonctionnement à des tensions comprises entre 0 Volt et quelques centaines de Volts.

6. Dispositif selon l'une quelconque des revendications 1 à 5, **caractérisé en ce que** la machine électrique tournante est un alternateur (4).

7. Dispositif selon l'une quelconque des revendications 1 à 5, **caractérisé en ce que** la machine électrique tournante est un alterno-démarreur (4).

8. Dispositif selon l'une quelconque des revendications 1 à 7, **caractérisé en ce que** lesdits moyens électroniques de commande (10) commandent un fonctionnement du dispositif de telle manière qu'à chaque délestage ou appel de charge, lesdits moyens électroniques de commande (10) régulent la tension pour réduire des surtensions et des sous-tensions sur le réseau de distribution électrique du véhicule provoquées par une dynamique limitée de la machine électrique tournante (4) en mode alternateur.

9. Dispositif selon la revendication 8, **caractérisé en ce que** lesdits moyens électroniques de commande (10) commandent un fonctionnement du dispositif de telle manière qu'un apport de courant d'assistance à la batterie (5) est déclenché automatiquement lors d'une phase d'accélération ou de démarrage, cet apport réduisant une chute de tension aux bornes de la batterie (5).

10. Dispositif selon la revendication 8 ou 9, **caractérisé en ce que** lesdits moyens électroniques de commande (10) commandent un fonctionnement du dispositif de telle manière à restituer de l'énergie stockée dans les moyens à réservoir d'énergie (1) pour alimenter le bus d'alimentation électrique à courant continu (3) en remplacement de la machine électrique tournante (4) lorsque le moteur thermique est en fonctionnement ou à l'arrêt.

11. Dispositif selon l'une quelconque des revendications 8 à 10, **caractérisé en ce que** lesdits moyens électroniques de commande (10) commandent un fonctionnement du dispositif de telle manière à alimenter les moyens à réservoir d'énergie (1) par la machine électrique tournante (4) en mode alternateur lorsque la batterie (5) est complètement chargée mais que les moyens à réservoir d'énergie (1) ne sont pas complètement chargés et que le moteur thermique n'est pas à l'arrêt.

12. Dispositif selon l'une quelconque des revendications 8 à 11, **caractérisé en ce que** lesdits moyens électroniques de commande (10) commandent un fonctionnement du dispositif de telle manière que lorsqu'il y a une sollicitation du frein de la part du conducteur, une partie de l'énergie cinétique du véhicule est récupérée et fournie aux moyens à réservoir d'énergie (1) afin de le remplir complètement.

13. Dispositif selon l'une quelconque des revendications 8 à 12, **caractérisé en ce que** lesdits moyens électroniques de commande (10) commandent un fonctionnement du dispositif de telle manière que lorsqu'il n'y a pas de sollicitation de l'accélérateur, ni de sollicitation du frein, si le moteur thermique n'est pas à l'arrêt, alors la machine électrique tournante (4) en mode alternateur alimente le réseau de distribution électrique et la batterie (5).

14. Dispositif selon l'une quelconque des revendications 8 à 13, **caractérisé en ce que** lesdits moyens électroniques de commande (10) commandent un fonctionnement du dispositif de telle manière que lorsqu'il n'y a pas de sollicitation de l'accélérateur, ni de sollicitation du frein, si le moteur thermique est à l'arrêt, alors les moyens à réservoir d'énergie (1) alimentent le réseau de distribution électrique et la batterie (5).

## Claims

1. Micro-hybrid device for a motor vehicle, said device consisting, in an electrical cascade connection, of a rotary electrical machine (4) mechanically coupled to a thermal engine of said vehicle, an AC-DC converter (2), a DC power supply bus (3), said DC power supply bus (3) being connected to said AC-DC converter (2) and capable of being connected to the terminals of an energy storage battery (5) powering an electrical distribution system of said vehicle, and large capacity energy storage means (1,9) which are mounted in parallel in relation to said cascade connection via a reversible DC-DC converter (8) connected to said DC power supply bus (3), **characterized in that** it further comprises electronic control means (10) controlling the operation of the device according to one or the other of the following modes:

   an autonomous mode of operation in which control of the device is defined autonomously by said electronic control means (10), and
   a driven mode of operation in which control of the device is defined by said electronic control means (10) depending on at least one piece of information (11) supplied to the device by a system of said vehicle, and **in that**
   in said autonomous mode of operation, said electronic control means (10) are programmed to ensure automatic regulation of the DC power supply bus (3) depending on a constant voltage $U_{ref}$ and a voltage $U_{bus}$ measured on the bus during recuperation of energy in said energy storage means (1) which is triggered when the condition $U_{bus} > U_{ref}$ is true or during restitution of energy by said energy storage means (1) which is triggered when the condition $U_{bus} < U_{ref}$ is true.

2. Device according to claim 1, **characterized in that** said reversible DC-DC converter (8) is of the switching type.

3. Device according to claim 1 or 2, **characterized in that** said large capacity energy storage means (1) consist of a supercapacitor (9).

4. Device according to any one of claims 1 - 3, **characterized in that** said large capacity energy storage means (1) are of the type which charges while operating at voltages ranging between 12V and 60V.

5. Device according to any one of claims 1 - 3, **characterized in that** said large capacity energy storage means (1) are of the type which charge while operating at voltages ranging between 0V and several hundred volts.

6. Device according to any one of claims 1 - 5, **characterized in that** the rotary electrical machine is an alternator (4).

7. Device according to any one of claims 1 - 5, **characterized in that** the rotary electrical machine is an alternator-starter (4).

8. Device according to any one of claims 1 - 7, **characterized in that** said electronic control means (10) control the operation of the device in such a way that at each power cut-off or load demand, said electronic control means (10) regulate the voltage to reduce any overvoltages and undervoltages on the electrical distribution system of the vehicle caused by a limited dynamic range of the rotary electrical machine (4) in alternator mode.

9. Device according to claim 8, **characterized in that** said electronic control means (10) control an operation of the device in such a way that an assist current contribution to the battery (5) is triggered automatically during a phase of acceleration or of starting, said assist current contribution reducing the drop in voltage at the terminals of the battery (5).

10. Device according to claim 8 or 9, **characterized in that** said electronic control means (10) control the operation of the device in such a way as to restore the energy stored in the energy storage means (1) to supply the DC electrical supply bus (3) as a replacement for the rotary electrical machine (4) when the thermal engine is running or stopped.

11. Device according to any one of claims 8 - 10, **characterized in that** said electronic control means (10) control the operation of the device in such a way as to supply the energy storage means (1) by the rotary electrical machine (4) in alternator mode when the battery (5) is fully charged but the energy storage means (1) are not fully charged and the thermal engine is not stopped.

12. Device according to any one of claims 8 - 11, **characterized in that** said electronic control means (10) control the operation of the device in such a way that when the brake is actuated by the driver, part of the kinetic energy of the vehicle is recuperated and fed to the energy storage means (1) in order to recharge them fully.

13. Device according to any one of claims 8 -12, **characterized in that** said electronic control means (10) control the operation of the device in such a way that when there is no actuation of the accelerator, nor of the brake, if the thermal engine is not stopped, then the rotary electrical machine (4) in alternator mode powers the electrical distribution system and the battery (5).

14. Device according to any one of claims 8 - 13, **characterized in that** said electronic control means (10) control the operation of the device in such a way that when there is no actuation of the accelerator, nor of the brake, if the thermal engine is stopped, then the energy storage means (1) power the electrical distribution system and the battery (5).

**Patentansprüche**

1. Mikrohybridvorrichtung für ein Kraftfahrzeug, die in einer Kaskadenschaltung angeordnet eine drehende elektrische Maschine (4), die mechanisch mit einem Verbrennungsmotor des besagten Kraftfahrzeugs gekoppelt ist, einen AC/DC-Wandler (2), einen Gleichspannungsversorgungsbus (3), der an den besagten AC/DC-Wandler (2) angeschlossen ist und an die Klemmen einer Energiespeicherbatterie (5) angeschlossen werden kann, die ein elektrisches des besagten Kraftfahrzeugs versorgt, und Energiespeichermittel mit großer Kapazität (1, 9) umfasst, die parallel zu der besagten Kaskadenschaltung über einen umkehrbaren DC/DC-Wandler (8) eingebaut sind, der mit dem besagten Gleichspannungsversorgungsbus (3) verbunden ist, **dadurch gekennzeichnet, dass** sie auch elektronische Steuermittel (10) die eine der Vorrichtung der einen oder der anderen der nachstehenden Betriebsarten steuern:

- eine autonome Betriebsart, bei der die Steuerung der Vorrichtung durch die besagten elektronischen Steuermittel (10) autonom bestimmt wird und
- eine gesteuerte Betriebsart, bei der die Steuerung der Vorrichtung durch die besagten elektronischen Steuermittel (10) in Abhängigkeit von mindestens einer Information (11) bestimmt wird, die der von einem des besagten Kraftfahrzeugs geliefert wird,
und dass in der besagten autonomen die besagten elektronischen Steuermittel (10) so programmiert sind, dass sie automatisch eine des Glejchspannungsversorgungsbusses (3) in Abhängigkeit von einer konstanten Spannung $U_{Soll}$ und von einer Spannung $U_{bus}$ vornehmen, die bei einer Energierückgewinnung in den besagten Energiespeichermitteln (1), die sich einschaltet, wenn die Bedingung $U_{bus} > U_{Soll}$ erfüllt ist, oder bei einer Energieabgabe durch die besagten Energiespeichermittel (1), die sich einschaltet, wenn die Bedingung $U_{bus} < U_{Soll}$ erfüllt ist, an dem Bus gemessen wird.

2. Vorrichtung nach Anspruch 1, **dadurch gekennzeichnet, dass** der umkehrbare DC/DC-Wandler (8) ein ist.

3. Vorrichtung nach Anspruch 1 oder 2, **dadurch gekennzeichnet, dass** die besagten Energiespeichermittel mit großer Kapazität (1) ein Supercap (9) umfassen.

4. Vorrichtung nach einem der Ansprüche 1 bis 3, **dadurch gekennzeichnet, dass** die besagten Energiespeichermittel mit großer Kapazität (1) von der Art sind, die sich während des bei Spannungen zwischen 12 und 60 Volt auflädt.

5. Vorrichtung nach einem der Ansprüche 1 bis 3, **dadurch gekennzeichnet, dass** die besagten Energiespeichermittel mit großer Kapazität (1) von der Art sind, die sich während des bei Spannungen wischen 0 und einigen hundert Volt auflädt.

6. Vorrichtung nach einem der Ansprüche 1 bis 5, **da-**

**durch gekennzeichnet, dass** die drehende elektrische ein Generator (4) ist.

7. Vorrichtung nach einem der Ansprüche 1 bis 5, **dadurch gekennzeichnet, dass** die ein Starter-Generator (4) ist.

8. Vorrichtung nach einem der Ansprüche 1 bis 7, **dadurch gekennzeichnet, dass** die besagten elektronischen Steuermittel (10) eine Funktionsweise der Vorrichtung so steuern, bei jeder Entlastung oder Lastanforderung die besagten elektronischen Steuermittel (10) die Spannung regulieren, um Über- und Unterspannungen im elektrischen Versorgungsnetz des Kraftfahrzeugs zu die durch eine begrenzte Dynamik der drehenden elektrischen Maschine (4) im Generatorbetrieb verursacht werden.

9. Vorrichtung nach Anspruch 8, **dadurch gekennzeichnet, dass** die besagten elektronischen Steuermittel (10) eine Funktionsweise der Vorrichtung so steuern, dass bei einer Beschleunigungs- oder Anlassphase automatisch eine Hilfsstromzuführung für die Batterie (5) ausgelöst wird, wobei diese Stromzuführung einen Spannungsabfall an den der Batterie (5) mindert.

10. Vorrichtung nach Anspruch 8 oder 9, **dadurch gekennzeichnet, dass** die besagten elektronischen Steuermittel (10) eine Funktionsweise der Vorrichtung so steuern, dass die in den Energiespeichermitteln (1) gespeicherte Energie wieder abgegeben wird, um den Gleichspannungsversorgungsbus (3) an der drehenden elektrischen Maschine (4) zu speisen, wenn der Verbrennungsmotor in Betrieb oder aus ist.

11. Vorrichtung nach einem der Ansprüche 8 bis 10, **dadurch gekennzeichnet, dass** die besagten elektronischen Steuermittel (10) eine Funktionsweise der Vorrichtung so steuern, dass die Energiespeichermittel (1) von der drehenden elektrischen Maschine (4) im Generatorbetrieb gespeist werden, wenn die Batterie (5) vollständig aufgeladen ist, die Energiespeichermittel (1) aber nicht vollständig aufgeladen sind und der Verbrennungsmotor nicht aus ist.

12. Vorrichtung nach einem der ansprüchen bis 1, **dadurch gekennzeichnet, dass** die besagten elektronischen Steuermittel (10) eine Funktionsweise der Vorrichtung so steuern, dass bei einer Betätigung der Bremse durch den Fahrer ein Teil der kinetischen Energie des Fahrzeugs rückgewonnen und an die Energiespeichermittel (1) geliefert wird, um sie vollständig aufzufüllen.

13. Vorrichtung nach einem der ansprüche 8 bis 12, **durch gekennzeichnet, dass** die besagten elektronischen Steuermittel (10) eine Funktionsweise der Vorrichtung so steuern, dass wenn weder der Gashebel noch die Bremse wird und der Verbrennungsmotor nicht aus ist, die drehende elektrische Maschine (4) im Generatorbetrieb das elektrische Versorgungsnetz und die Batterie (5) speist.

14. Vorrichtung nach einem der ansprüche 8 bis 13, **dadurch gekennzeichnet, dass** die besagten elektronischen Steuermittel (10) eine Funktionsweise der Vorrichtung so steuern, dass wenn weder der Gashebel noch die Bremse betätigt wird und der Verbrennungsmotor aus ist, die Energiespeichermittel (1) das elektrische und die Batterie (5) speisen.

FIG.2

EP 2 032 383 B1

**RÉFÉRENCES CITÉES DANS LA DESCRIPTION**

**Documents brevets cités dans la description**

- DE 10042414 A1